# EUROPÄISCHE PATENTSCHRIFT

(11) **EP 4 114 645 B1**
(45) Veröffentlichungstag und Bekanntmachung des Hinweises auf die Patenterteilung: **11.09.2024**
(21) Anmeldenummer: 21705917.9
(22) Anmeldetag: 12.02.2021
(51) Int. Cl.: B29C 64/255, B33Y 10/00, B33Y 30/00

(54) **ADDITIVE HERSTELLUNGSEINRICHTUNG UND VERFAHREN ZUR ADDITIVEN HERSTELLUNG EINES DREIDIMENSIONALEN ERZEUGNISSES**
ADDITIVE MANUFACTURING APPARATUS AND METHOD FOR THE ADDITIVE MANUFACTURE OF A THREE-DIMENSIONAL PRODUCT
APPAREIL DE FABRICATION ADDITIVE ET PROCÉDÉ DE FABRICATION ADDITIVE D'UN PRODUIT TRIDIMENSIONNEL

(30) Priorität: 02.03.2020 DE 102020105524
(43) Veröffentlichungstag der Anmeldung: 11.01.2023
(73) Patentinhaber: Otto-von-Guericke-Universität Magdeburg, 39106 Magdeburg (DE)
(72) Erfinder: STEGEMANN, Nils Lothar, 39104 Magdeburg (DE); ODENBACH, Robert, 39116 Magdeburg (DE); HICHERT, Sebastian, 99734 Nordhausen (DE); PIETRAS, Jan Patrick, 06618 Naumburg (DE)
(74) Vertreter: Günther, Constantin
(86) Internationale Anmeldenummer: PCT/EP2021/053450
(87) Internationale Veröffentlichungsnummer: WO 2021/175567

(56) Entgegenhaltungen:
- WO-A1-2018/194614
- JP-A- 2016 060 173
- US-A1- 2017 291 372
- US-A1- 2019 262 899
- US-A1- 2020 009 790

## Beschreibung

Die Erfindung betrifft eine additive Herstellungseinrichtung, die zur schichtweisen Herstellung eines dreidimensionalen Erzeugnisses aus einem flüssigen Rohmaterial mittels eines Tauchbad-Stereolithographie-Verfahrens eingerichtet ist. Die Erfindung betrifft außerdem ein Tauchbad-Stereolithographie-Verfahren zur schichtweisen Herstellung eines dreidimensionalen Erzeugnisses aus einem flüssigen Rohmaterial mittels einer additiven Herstellungseinrichtung der zuvor angegebenen Art.

Allgemein betrifft die Erfindung das Gebiet der additiven Herstellung von dreidimensionalen Erzeugnissen nach dem Stereolithographie-Verfahren, somit ein Teilgebiet des sogenannten 3D-Druckens. Die Stereolithographie (SL) ist insbesondere für die Fertigung von präzisen Modellen ein etabliertes generatives Fertigungsverfahren. Als Rohmaterial können flüssige Fotopolymere beziehungsweise fotosensitive Harze mit unterschiedlichen Färbungen, Materialeigenschaften und Zusatzpartikeln eingesetzt werden. Das Erzeugnis wird dabei schichtweise aus dem Rohmaterial aufgebaut. Es wird unterschieden zwischen dem Right-Side-Up-Verfahren (RSU, auch Tauchbad- oder Top-Down-Verfahren genannt) und dem Upside-Down-Verfahren.

Beim RSU-Verfahren wird ein vergleichsweise großer Fertigungsbehälter eingesetzt, in dem eine Fertigungsbasis, auf dem das Erzeugnis schichtweise erzeugt wird, jeweils nach Erzeugung einer Schicht abgesenkt wird. Die Fertigungsbasis bewegt sich somit beim RSU-Verfahren von oben nach unten. Beim Upside-Down-Verfahren wird ein inverses Druckprinzip genutzt. Die Fertigungsbasis wird nach Erzeugung einer Schicht des Erzeugnisses etwas nach oben bewegt, sodass insgesamt eine Bewegung von unten nach oben erfolgt. Die Bestrahlung des Rohmaterials, um dieses Auszuhärten, erfolgt beim Upside-Down-Verfahren von unten, beim RSU-Verfahren von oben.

Aus der US 2020/0009790 A1 ist ein optischer 3D-Drucker vom geschlossenen Typ bekannt. Aus der US 2017/0291372 A1 ist die Herstellung dreidimensionaler Objekte mittels dreidimensionalen Druckens mit Rotation bekannt. Aus der WO 2018/194614 A1 ist ein 3D-Drucker und ein Herstellungsmodul bekannt. Aus der JP 2016-060173 A ist ein Behälter und ein mit einem solchen Behälter ausgebildeter 3D-Drucker bekannt. Aus der US 2019/0262899 A1 ist ein kompakter Fertigungsbehälter für eine additive Herstellungseinrichtung bekannt.

Der Erfindung liegt die Aufgabe zugrunde, die additive Herstellung eines dreidimensionalen Erzeugnisses durch ein generatives Fertigungsverfahren weiter zu optimieren und für vielfältige Anwendungen nutzbar zu machen.

Diese Aufgabe wird mit einer additiven Herstellungseinrichtung gemäß Anspruch 1 gelöst. Dies beinhaltet, dass der Fertigungsbehälter, der auch als Bautank bezeichnet wird, hinsichtlich seines Aufnahmevolumens für das Rohmaterial variabel verstellbar ist. Vorteilhafter Weise kann somit bei der erfindungsgemäßen Herstellungseinrichtung das Aufnahmevolumen des Fertigungsbehälters kleiner oder größer eingestellt werden, z.B. je nach der Größe des herzustellenden dreidimensionalen Erzeugnisses. Bisherige RSU-Anlagen sind üblicherweise im industriellen Maßstab mit einem sehr großen Fertigungsbehälter ausgeführt, der aufgrund des RSU-Prinzips im Wesentlichen vollständig mit dem Rohmaterial gefüllt sein muss, da das Erzeugnis bei seiner Herstellung zusammen mit der Fertigungsbasis immer weiter in den Fertigungsbehälter eingetaucht wird. Hiermit geht ein enorm hoher Kostenfaktor einher, beispielsweise in der Größenordnung von 10.000,00 Euro für die Befüllung des Fertigungsbehälters mit Rohmaterial. Dementsprechend sind bekannte RSU-Anlagen unwirtschaftlich bei der Herstellung kleinerer Erzeugnisse in geringer Stückzahl. Zudem ist ein Wechsel des Rohmaterials mit großem Aufwand verbunden, da der Fertigungsbehälter vollständig geleert und danach vollständig mit einem anderen Rohmaterial gefüllt werden muss.

Bei der erfindungsgemäßen Herstellungseinrichtung kann stattdessen das Aufnahmevolumen des Fertigungsbehälters an die jeweilige Fertigungsaufgabe angepasst werden. Dementsprechend ist auch ein Wechsel des Rohmaterials einfacher möglich, da nicht so große Mengen jeweils erforderlich sind. Zudem können weitere Nachteile wie z.B. Alterungseffekte am Rohmaterial aufgrund langer Standzeiten oder sich aufgrund langer Standzeiten ergebende Verunreinigungen oder ungewollte Verfestigungen des Rohmaterials durch das an die Fertigungsaufgabe angepasste Aufnahmevolumen des Fertigungsbehälters minimiert werden.

Der Fertigungsbehälter kann beispielsweise derart ausgebildet sein, dass das Aufnahmevolumen durch Verschieben oder Verstellen einer Seitenwand des Fertigungsbehälters verstellt werden kann. Auf diese Weise kann der Fertigungsbehälter je nach herzustellendem Erzeugnis breiter oder schmaler eingestellt werden.

Gemäß einer vorteilhaften Ausgestaltung der Erfindung ist vorgesehen, dass der Fertigungsbehälter wenigstens einen vertikal und/oder horizontal verstellbaren Kolben aufweist, durch dessen Verstellung das Aufnahmevolumen des Fertigungsbehälters variabel verstellbar ist. Dies erlaubt eine besonders universelle Verstellbarkeit des Aufnahmevolumens des Fertigungsbehälters und damit des zur Verfügung stehenden Bauraums. Ein vertikal verstellbarer Kolben kann zum Beispiel durch den nachfolgend erläuterten verstellbaren Boden bzw. durch einzelne Bodensegmente des Bodens realisiert werden. Die Angabe "vertikal" bezieht sich dabei auf die Wirkrichtung der Schwerkraft. Die horizontale Richtung verläuft dabei orthogonal zur vertikalen Richtung.

Gemäß der Erfindung ist vorgesehen, dass die additive Herstellungseinrichtung eine Fertigungsbasis aufweist, auf der das Erzeugnis im Betrieb der additiven Herstellungseinrichtung mittels des Stereolithographie-Verfahrens dreidimensional schichtweise erstellt wird. Die Fertigungsbasis kann zum Beispiel als Plattform ausgebildet sein, zum Beispiel als Gitter oder gelochte Platte, insbesondere als ebene Bauplattform.

Gemäß einer vorteilhaften Ausgestaltung der Erfindung ist vorgesehen, dass der Fertigungsbehälter zumindest im Bereich der Fertigungsbasis, in dem das Erzeugnis im Betrieb der additiven Herstellungseinrichtung mittels des Tauchbad-Stereolithographie-Verfahrens dreidimensional schichtweise erstellt wird, zur umgebenden Atmosphäre hin offen ist, d.h. nicht gasdicht ist. Ein solches offenes System kann technisch einfacher realisiert werden als ein geschlossenes System, bei dem der Bauraum für die Herstellung des Erzeugnisses gasdicht gestaltet sein muss. Der Fertigungsbehälter kann auch insgesamt als offenes System gestaltet sein, d. h. nicht gasdicht sein. Hierdurch wird die Herstellung der additiven Herstellungseinrichtung noch weiter vereinfacht.

Gemäß der Erfindung ist vorgesehen, dass der Fertigungsbehälter einen verstellbaren Boden aufweist, durch dessen Verstellung das Aufnahmevolumen des Fertigungsbehälters variabel verstellbar ist. Dies hat den Vorteil, dass der Fertigungsbehälter hinsichtlich der für das Rohmaterial nutzbaren Höhe verstellbar ist. Soll beispielsweise ein relativ flaches dreidimensionales Erzeugnis mittels der Herstellungseinrichtung hergestellt werden, kann der verstellbare Boden relativ weit nach oben verfahren werden, sodass die Tiefe des Aufnahmevolumens relativ gering ist. Soll ein breiteres oder höheres Erzeugnis hergestellt werden, kann der verstellbare Boden nach unten verfahren werden, sodass das Aufnahmevolumen eine größere Tiefe hat. Durch den verstellbaren Boden kann somit der verfügbare Bauraum für die Herstellung des Erzeugnisses in einfacher Weise angepasst werden.

Gemäß der Erfindung ist vorgesehen, dass die Fertigungsbasis separat vom verstellbaren Boden höhenverstellbar ist, d.h. unabhängig vom verstellbaren Boden höhenverstellbar sein.

In der erfindungsgemäßen Variante ist die Fertigungsbasis separat vom verstellbaren Boden höhenverstellbar. In diesem Fall kann zum Beispiel das gewünschte Aufnahmevolumen des Fertigungsbehälters zu Beginn des Herstellungsprozesses einmalig eingestellt werden und unabhängig von dem verstellbaren Boden die Fertigungsbasis wie bei bekannten Stereolithographie-Anlagen während des Herstellungsprozesses jeweils schichtweise abgesenkt oder angehoben werden. Es kann auch eine Verstellung des verstellbaren Bodens während des Herstellungsprozesses des dreidimensionalen Erzeugnisses unabhängig von der Verstellung der Fertigungsbasis durchgeführt werden, z.B. indem der verstellbare Boden weniger häufig und in größeren Schritten verstellt wird als die Fertigungsbasis.

Dabei ist die Fertigungsbasis oberhalb des verstellbaren Bodens angeordnet. Weitere Vorteile sind:
- Entkopplung der Fertigungsbasis von möglichen, eventuell störenden Begleiterscheinungen, die vom verstellbaren Boden verursacht werden können, wie zum Beispiel eine ungenaue Einstellung des verstellbaren Bodens oder mehr oder weniger große Kippeffekte oder eine Schiefstellung, beispielsweise durch Ratterbewegungen ausgelöst durch Dichtungen.
- Unabhängiges Höhenverstellen der Fertigungsbasis. Dies ist beispielsweise dann besonders vorteilhaft, wenn die Herstellung von zwei Erzeugnissen unmittelbar nacheinander durchgeführt werden soll. Dann muss das Rohmaterial nicht zwischen diesen Herstellprozessen erst wieder vollständig in den Vorratsbehälter abgeführt und anschließend erneut in den Fertigungsbehälter gefördert werden.
- Präziseres Verfahren der Fertigungsbasis in vertikaler Richtung ist möglich, weil der verstellbare Boden nicht mitbewegt werden muss. Auf diese Weise können beispielsweise eventuelle Störeffekte von Reibkräften durch die Dichtungen vermieden werden. Der verstellbare Boden kann dementsprechend in größeren Stufen verfahren werden, die wesentlich größer als die Schichthöhe einer Schicht des Erzeugnisses sind. Dabei kann die Fertigungsbasis aufgrund Ihrer separaten Verstellbarkeit entsprechend der Schichthöhe, beispielsweise um 0,05 mm, verfahren werden.

Gemäß einer vorteilhaften Ausgestaltung der Erfindung ist vorgesehen, dass der verstellbare Boden mehrere einzelne Bodensegmente aufweist, die separat voneinander höhenverstellbar sind. Auf diese Weise kann das Aufnahmevolumen des Fertigungsbehälters, zusätzlich zu der Höhe, auch hinsichtlich der Querschnittsfläche, das heißt in der Breite, variiert werden, ohne dass eine Seitenwand verstellbar ausgebildet sein muss. Dabei kann der gesamte Boden durch die einzelnen, verstellbaren Bodensegmente gebildet sein, oder nur ein Teilbereich des Bodens. Die einzelnen Bodensegmente können dabei nebeneinander angeordnet sein. Die Bodensegmente können in Draufsicht auf den Boden beispielsweise eine rechteckförmige, quadratische, dreieckförmige, sechseckförmige oder sonstige vieleckige Form aufweisen. Die Bodensegmente können auch Hakenformen aufweisen und ineinander verschachtelt sein. Die einzelnen Bodensegmente können auch eine abgerundete Außenkontur aufweisen, beispielsweise eine kreisrunde Kontur. Die Bodensegmente können hinsichtlich des Flächenanteils, den sie am verstellbaren Boden bilden, gleichgroß oder unterschiedlich groß ausgebildet sein. Die Bodensegmente können beispielsweise mehrere Bodensegmente mit ringförmiger Kontur und unterschiedlichen Durchmessern aufweisen, die konzentrisch ineinander angeordnet sind.

Gemäß einer vorteilhaften Ausgestaltung der Erfindung ist vorgesehen, dass der verstellbare Boden nach Art eines Kolbens ausgebildet ist, der am Außenumfang wenigstens eine Dichtung aufweist. Die Dichtung kann beispielsweise nach Art eines Kolbenrings ausgebildet sein. Auf diese Weise kann der verstellbare Boden besonders zuverlässig abgedichtet und mit einfacher Konstruktion realisiert werden. Die Dichtung ist dabei vorteilhaft aus einem Material, das nicht mit dem Rohmaterial reagiert. Die Dichtung kann beispielsweise aus PTFE sein.

Gemäß einer vorteilhaften Ausgestaltung der Erfindung ist vorgesehen, dass der verstellbare Boden aus mehreren Einzelsegmenten zusammengesetzt ist, zwischen denen jeweils eine Dichtung angeordnet ist. Dies erlaubt eine besonders zuverlässige Abdichtung des verstellbaren Bodens gegenüber Seitenwänden des Fertigungsbehälters. Der fertige Boden ist dabei gegenüber den Seitenwänden des Fertigungsbehälters höhenverstellbar. Die Einzelsegmente können dabei schichtweise aufeinander gesetzt sein.

Gemäß einer vorteilhaften Ausgestaltung der Erfindung ist vorgesehen, dass die additive Herstellungseinrichtung wenigstens einen Fördermechanismus zum Nachfördern des Rohmaterials von einem Rohmaterial-Vorratsbehälter in den Fertigungsbehälter aufweist. Auf diese Weise kann während des Herstellprozesses automatisch ausreichend Rohmaterial in den Fertigungsbehälter nachgefüllt werden. Der Fördermechanismus kann insbesondere eine Pumpe aufweisen, beispielsweise eine Peristaltikpumpe. Der Fördermechanismus kann zum Abfördern des Rohmaterials von dem Rohmaterial-Vorratsbehälter in den Fertigungsbehälter fungieren. Es kann zudem eine Abführung überschüssigen Rohmaterials mittels eines Überlaufs erfolgen.

Nach Abschluss des Herstellungsprozesses kann das noch im Fertigungsbehälter verbliebende, nicht verarbeitete Rohmaterial in den Rohmaterial-Vorratsbehälter zurückgeführt werden, beispielsweise dadurch, dass das Aufnahmevolumen des Fertigungsbehälters wieder verringert wird, z.B. indem der verstellbare Boden nach oben verfahren wird und das überschüssige Rohmaterial beispielsweise durch den Überlauf in den Vorratsbehälter zurückgelangt.

Gemäß einer vorteilhaften Ausgestaltung der Erfindung ist vorgesehen, dass die additive Herstellungseinrichtung wenigstens eine Heizeinrichtung zum Beheizen des im Rohmaterial-Vorratsbehälter befindlichen Rohmaterials aufweist. Dies hat den Vorteil, dass das Rohmaterial in passend temperierter Form in dem Fertigungsbehälter bereitgestellt werden kann. Zusätzlich oder alternativ kann die additive Herstellungseinrichtung wenigstens eine Heizeinrichtung zum Beheizen des im Fertigungsbehälter befindlichen Rohmaterials aufweisen. Auf diese Weise kann das Rohmaterial auch im Fertigungsbehälter temperiert werden.

Gemäß einer vorteilhaften Ausgestaltung der Erfindung ist vorgesehen, dass der Fertigungsbehälter eine oder mehrere verstellbare Seitenwände aufweist, durch deren Verstellung das Aufnahmevolumen des Fertigungsbehälters variabel verstellbar ist. Auf diese Weise ist die Herstellungseinrichtung noch universeller und flexibler einsetzbar. Der Fertigungsbehälter kann z.B. nach Art eines Falteimers, nach Art eines verstellbaren Backrahmens oder nach Art einer verstellbaren Springform ausgebildet sein. Der Fertigungsbehälter kann auch nach dem Irisblenden-Bauprinzip ausgebildet sein. Dies erlaubt eine kreisrunde, konzentrische Bauraumänderung. Bei dieser Bauweise können die Seitenwände des Fertigungsbehälters z.B. durch bewegliche Lamellen gebildet sein. Durch Drehen eines außenliegenden Rings werden die Lamellen zueinander ausgerichtet, sodass das Aufnahmevolumen des Fertigungsbehälters kreisförmig vergrößert oder verkleinert werden kann. Die Drehbewegung des außenliegenden Rings kann manuell oder motorbetrieben erzeugt werden. Dabei sind die beweglichen Lamellen untereinander und zu einem Boden des Fertigungsbehälters abgedichtet. Die verstellbaren Seitenwände verfügen über Dichtungen, die zu der darunter befindlichen, unveränderlichen Bodenplatte den Fertigungsbehälter abdichten.

Gemäß einer vorteilhaften Ausgestaltung der Erfindung ist vorgesehen, dass der Fertigungsbehälter einen kreisförmigen Querschnitt aufweist. Dies erlaubt eine besonders einfache und zuverlässige Realisierung des Fertigungsbehälters. Der Fertigungsbehälter kann auf diese Weise wie eine Kolben-Zylinderanordnung ausgebildet sein, wobei der Kolben den verstellbaren Boden bildet und der Zylinder die Seitenwände des Fertigungsbehälters. Der Fertigungsbehälter kann auch einen quadratischen oder einen rechteckförmigen Querschnitt aufweisen.

Die eingangs genannte Aufgabe wird außerdem gelöst durch ein Tauchbad-Stereolithographie-Verfahren zur schichtweisen Herstellung eines dreidimensionalen Erzeugnisses aus einem flüssigen Rohmaterial mittels einer additiven Herstellungseinrichtung der zuvor erläuterten Art, wobei vor, während und/oder nach dem Herstellungsprozess des dreidimensionalen Erzeugnisses das Aufnahmevolumen des Fertigungsbehälters in einem oder mehreren Schritten verstellt wird. Auch hierdurch können die zuvor erläuterten Vorteile realisiert werden.

Wenn eine Verstellung des Aufnahmevolumens des Fertigungsbehälters während des Herstellungsprozesses durchgeführt wird, ist es vorteilhaft, wenn diese Verstellung des Aufnahmevolumens nur in solchen Zeiträumen durchgeführt wird, in denen gerade keine Aushärtung des Rohmaterials zur Erzeugung einer Schicht des Erzeugnisse durchgeführt wird, das heißt wenn beispielsweise gerade keine Bestrahlung mit Licht durchgeführt wird. Beispielsweise kann eine Verstellung des Aufnahmevolumens des Fertigungsbehälters während des Herstellungsprozesses nach vollständiger Erzeugung einer Schicht des Erzeugnisses und vor Beginn der Erzeugung der nächsten Schicht des Erzeugnisses durchgeführt werden.

Mit der erfindungsgemäßen additiven Herstellungseinrichtung können zum Beispiel MRT-Marker gemäß DE 10 2016 117 763 A1 besonders wirtschaftlich erzeugt werden. Dabei wird vorteilhafterweise die Right-Side-Up-Stereolithographie genutzt. Dabei entstehen Materialeinschlüsse des zu verarbeitenden Rohmaterials, die nicht ausgehärtet werden. Dies ist aber gerade bei der Erzeugung solcher MRT-Marker ein Vorteil, weil dieses noch flüssige Rohmaterial als Referenz bei einer MRT-Untersuchung detektiert und beispielsweise zum Zweck der Ortsbestimmung von ansonsten im MRT unsichtbaren Instrumenten ausgewertet werden kann.

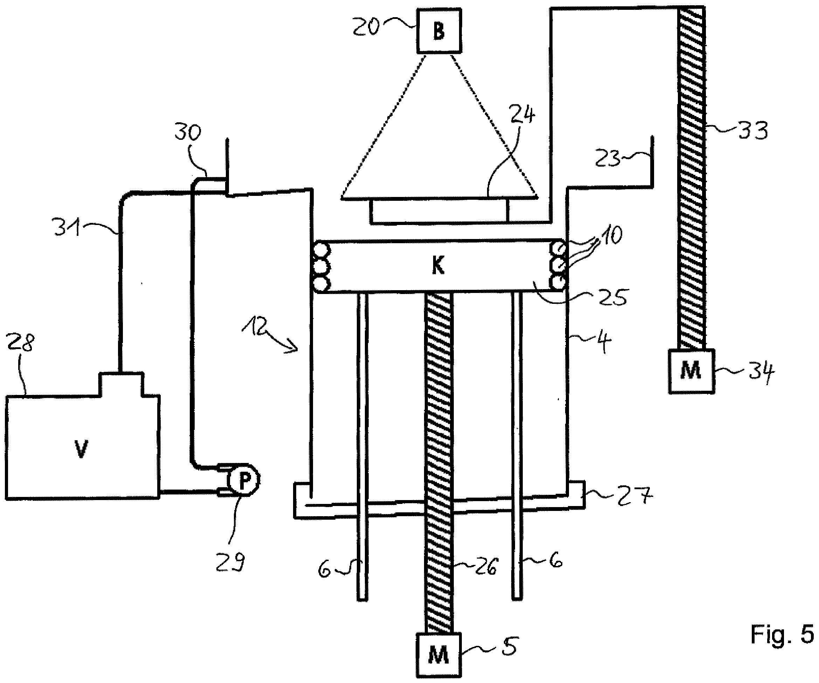

Die Erfindung wird nachfolgend unter Verwendung von Zeichnungen näher erläutert. Dabei zeigt die Figur 5 die erfindungsgemäße Variante.

Es zeigen:
- Figur 1: eine additive Herstellungseinrichtung in einer seitlichen Schnittdarstellung und
- Figur 2: die Herstellungseinrichtung gemäß Figur 1 ohne eine Oberschale des Fertigungsbehälters und
- Figur 3: eine weitere Ausführungsform einer additiven Herstellungseinrichtung zu Beginn des Herstellungsprozesses und
- Figur 4: die Herstellungseinrichtung gemäß Figur 3 in einem späteren Stadium des Herstellungsprozesses und
- Figur 5: eine weitere Ausführungsform einer additiven Herstellungseinrichtung und
- Figur 6: den Ablauf eines Herstellungsverfahrens mit einer Herstellungseinrichtung gemäß einer der Figuren 1 bis 4 und
- Figur 7: den Ablauf des Herstellungsverfahrens mit einer Herstellungseinrichtung gemäß Figur 5 und
- Figuren 8 bis 11: weitere Ausführungsformen eines verstellbaren Bodens und
- Figur 12: eine Detaildarstellung eines verstellbaren Bodens 3 in perspektivischer Ansicht und
- Figur 13: der verstellbare Boden gemäß Figur 12 in einer seitlichen Explosionsansicht und
- Figuren 14 bis 15: eine Ausführungsform eines Fertigungsbehälters mit verstellbarer Seitenwand und
- Figuren 16 bis 17: eine Ausführungsform eines Fertigungsbehälters mit mehreren verstellbaren Seitenwänden und
- Figuren 18 bis 19: eine Ausführungsform eines Fertigungsbehälters nach dem Falteimer-Prinzip.

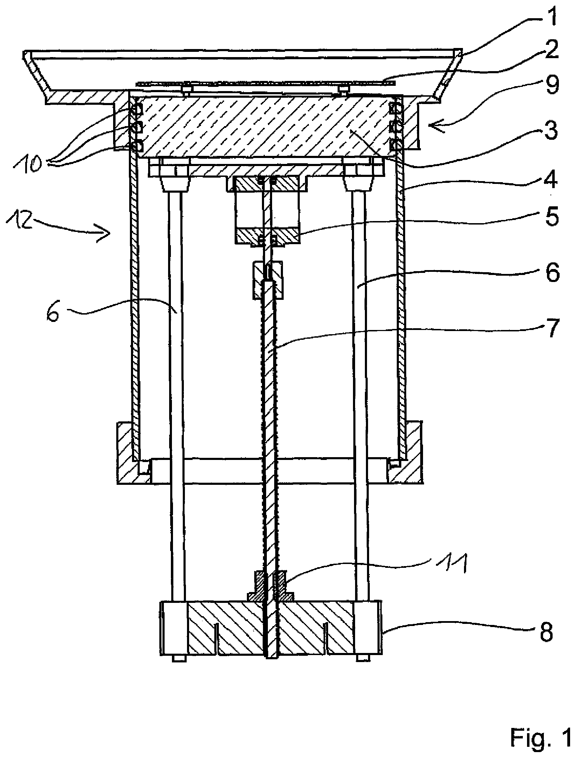

Die in Figur 1 dargestellte additive Herstellungseinrichtung weist einen Fertigungsbehälter 12 auf, der aus einer Oberschale 1, einer Unterschale 4 und einem innerhalb der Unterschale 4 längsbeweglichen, verstellbaren Boden 3 zusammengesetzt ist.

Die Oberschale 1 ist mit der Unterschale 4 in einem Anschlussbereich 9 verbunden. In dem Anschlussbereich 9 können beispielsweise auch Verbindungsanschlüsse für Zuführ-und Ablaufleitungen für die Zuführung und/oder Abführung des Rohmaterials aus einem Vorratsbehälter in den Fertigungsbehälter 12 angeordnet sein. Der Fertigungsbehälter 12 muss nicht unbedingt zweiteilig mit der Oberschale 1 und der Unterschale 4 gebildet sein, je nach Gestaltung kann beispielsweise die Oberschale 1 auch entfallen oder die Oberschale 1 und die Unterschale 4 als ein Bauteil einstückig ausgebildet sein.

Der verstellbare Boden 3 ist wie ein Kolben ausgebildet, der in einem Zylinder, gebildet durch die Unterschale 4, in Längsrichtung verfahrbar ist. Der Boden 3 weist am Außenumfang mehrere Dichtringe 10 auf, durch die der Boden 3 gegenüber der Unterschale 4 abgedichtet ist. Die additive Herstellungseinrichtung weist eine Fertigungsbasis 2 auf, auf der das herzustellende dreidimensionale Erzeugnis schichtweise mittels des Stereolithographie-Verfahrens erstellt wird. Die Fertigungsbasis 2 kann fest mit dem Boden 3 verbunden sein. Mit anderen Worten, wenn der Boden 3 verstellt wird, folgt die Fertigungsbasis 2 dieser Verstellbewegung.

Der Boden 3 kann grundsätzlich manuell verstellbar sein. Für einen effizienten Stereolithographie-Herstellprozess ist es aber vorteilhafter, wenn der Boden 3 motorisch verstellbar ist, wobei die Verstellung durch eine Steuereinrichtung automatisch gesteuert werden kann.

Im dargestellten nicht erfindungsgemäßen Ausführungsbeispiel der Figur 1 ist der Boden 3 mit einem Motor 5, zum Beispiel einem Elektromotor, gekoppelt. Der Motor 5 weist eine Welle auf, die mit einer Spindel 7 verbunden ist. Die Spindel 7 kann zum Beispiel ein Außengewinde aufweisen. Die Spindel 7 läuft in einer Mutter 11. Die Mutter 11 ist an einem Basiskörper 8 der Herstellungseinrichtung befestigt. Zur Verbesserung der linearen Führung des Bodens 3 sind am Boden 3 zusätzlich Führungsachsen 6 angebracht, die in Linearlagern des Basiskörpers 8 längsbeweglich gelagert sind. Wird die Spindel 7 durch Drehung des Motors 5 verstellt, dann wird der Boden 3 nach unten oder nach oben verfahren.

In allen beschriebenen Ausführungsbeispielen kann der Fertigungsbehälter 12 zumindest im Bereich der Fertigungsbasis 2, 24, in dem das Erzeugnis im Betrieb der additiven Herstellungseinrichtung mittels des Tauchbad-Stereolithographie-Verfahrens dreidimensional schichtweise erstellt wird, zur umgebenden Atmosphäre hin offen sein, d.h. nicht gasdicht sein. Zumindest das Aufnahmevolumen des Fertigungsbehälters 12 muss damit nicht gegenüber der Umgebung gekapselt sein.

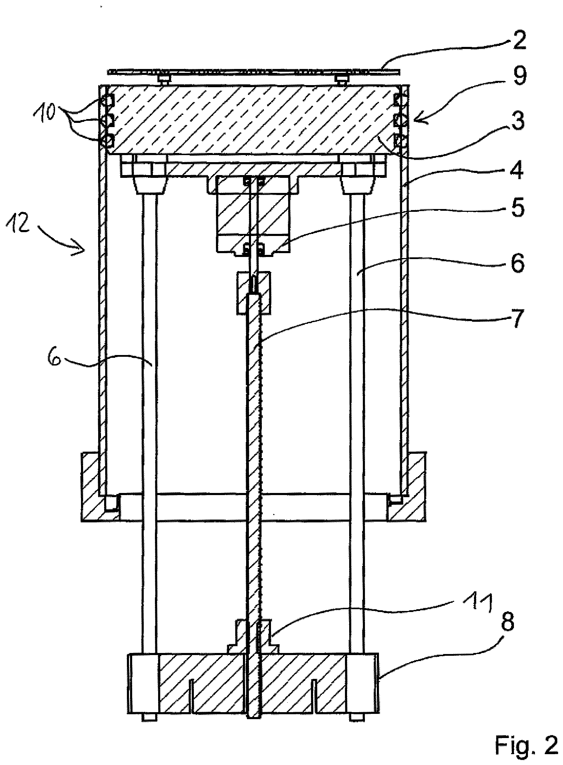

Die Figur 2 zeigt eine additive Herstellungseinrichtung, wie sie anhand der Figur 1 bereits erläutert wurde, jedoch ohne die Oberschale 1. Die übrigen Elemente sind wie in Figur 1 ausgebildet. Auch mit einer solchen Ausführungsform kann bereits ein Stereolithographie-Verfahren durchgeführt werden.

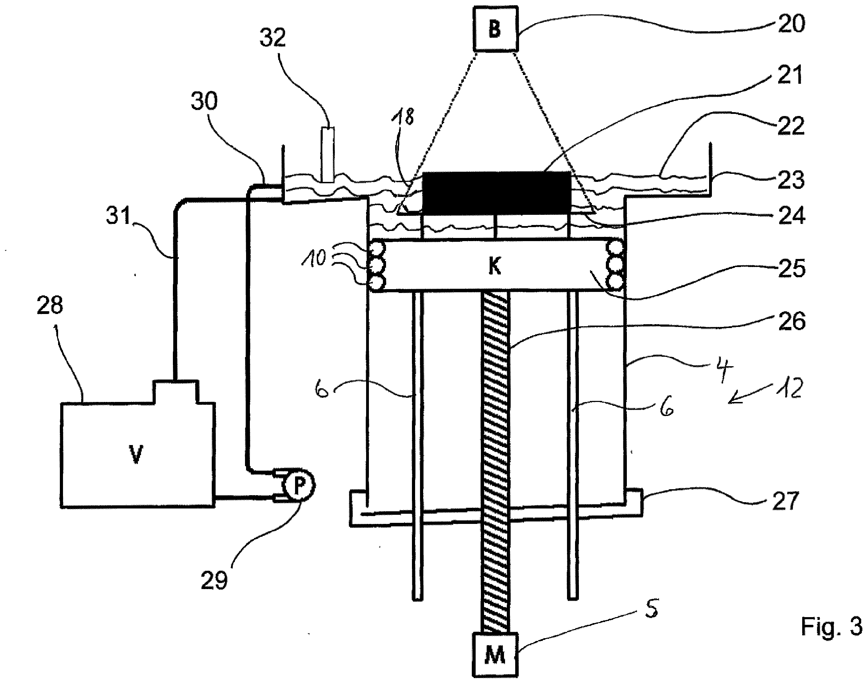

Die Figur 3 zeigt eine weitere nicht erfindungsgemäße Ausführungsform einer additiven Herstellungseinrichtung zu Beginn der Durchführung eines RSU-Stereolithographie-Verfahrens. Die Herstellungseinrichtung weist verschiedene Merkmale der bereits anhand der Figuren 1 und 2 beschriebenen Ausführungsform auf, zusätzlich sind einige geänderte und weitere Komponenten vorhanden. Der Fertigungsbehälter 12 weist wiederum eine Oberschale 23 und eine Unterschale 4 auf. In der Unterschale 4 befindet sich der verstellbare Boden 25, der wiederum mit Dichtungen 10 gegenüber der Unterschale 4 abgedichtet ist. An dem Boden 25 ist die Fertigungsbasis 24 befestigt. Der Boden 25 ist über eine Spindel 26 mit einem Motor 5 verbunden. Der Motor ist in diesem Fall nicht ortsfest am Boden 25 angeordnet, wie bei den zuvor beschrieben Ausführungsformen, sondern er ist ortsfest mit dem Basiskörper der Herstellungseinrichtung gekoppelt, der in der Figur 3 zur Vereinfachung nicht dargestellt ist. Zur Verbesserung der Linearführung ist der Boden 25 wiederum über die Führungsachsen 6 längsgeführt. Im oberen Bereich des Fertigungsbehälters 12 befindet sich bereits flüssiges Rohmaterial 22, aus dem das herzustellende dreidimensionale Erzeugnis 21 erzeugt werden soll. Erkennbar ist, dass schon ein Teil des Erzeugnisses 21 hergestellt wurde. Das soweit bereits hergestellte Erzeugnis 21 befindet sich dabei mit seiner Oberseite immer kurz unterhalb der Oberfläche des Rohmaterials 22. Die Herstellungseinrichtung weist eine steuerbare Härtungseinrichtung 20 auf. Die Härtungseinrichtung 20 kann zum Beispiel als Belichtungseinheit ausgebildet sein, wenn als Rohmaterial ein mittels Lichtbestrahlung aushärtendes Rohmaterial verwendet wird. Beispielsweise kann die Belichtungseinheit einen Laser und/oder ein Galvanometer aufweisen. Auch andere Lichtquellen als Laser sind geeignet, beispielsweise DLP (digital light processing). Durch die Härtungseinrichtung 20 wird jeweils computergesteuert eine Schicht des Erzeugnisses 21 aus dem Rohmaterial 22 ausgehärtet. Erkennbar sind z.B. die gepunktet dargestellten Beleuchtungslinien 18 im Rohmaterial 22. Ist die Erzeugung einer Schicht abgeschlossen, wird über den Motor 5 der Boden 25 um die Dicke der Schicht nach unten verstellt.

Die Herstellungseinrichtung weist außerdem ein Auftragelement 32 auf, zum Beispiel einen Rakel oder einen Wischer. Mittels dieses Auftragelements 32 wird kurz vor der Erzeugung der nächsten Schicht des Erzeugnisses das flüssige Rohmaterial geglättet. Hierfür kann beispielsweise elektromotorisch das Auftragelement 32 einmal über die Oberfläche des Erzeugnisses 21 hin- und hergefahren werden. Sodann wird mittels der Härtungseinrichtung 20 die nächste Schicht des Erzeugnisses 21 durch Aushärten des Rohmaterials 22 erzeugt.

Wie in der Figur 3 zu erkennen ist, weist die Herstellungseinrichtung zusätzlich einen Rohmaterial-Vorratsbehälter 28 und einen Fördermechanismus 29 auf. Der Fördermechanismus 29, der zum Beispiel als Pumpe ausgebildet sein kann, ist über eine Zuführleitung 30 mit dem Fertigungsbehälter 12 verbunden. Über den Fördermechanismus 29 kann Rohmaterial aus dem Vorratsbehälter 28 durch die Leitung 30 in den Fertigungsbehälter 12 gefördert werden. Zusätzlich ist der Fertigungsbehälter 12 über eine Rückführleitung 31 mit dem Vorratsbehälter 28 verbunden. Über diese Rückführleitung 31 kann überschüssiges Rohmaterial aus dem Fertigungsbehälter 12 wieder zurück in den Vorratsbehälter 28 geführt werden.

Die Figur 3 zeigt außerdem, dass die Herstellungseinrichtung eine Auffangeinrichtung 27 aufweisen kann, die zum Beispiel am unteren Ende des Fertigungsbehälters 12 angeordnet ist. Auf diese Weise kann sichergestellt werden, dass eventuell doch durch den Boden 25 und die Dichtungen 10 hindurchkommendes Rohmaterial 22 gezielt aufgefangen wird.

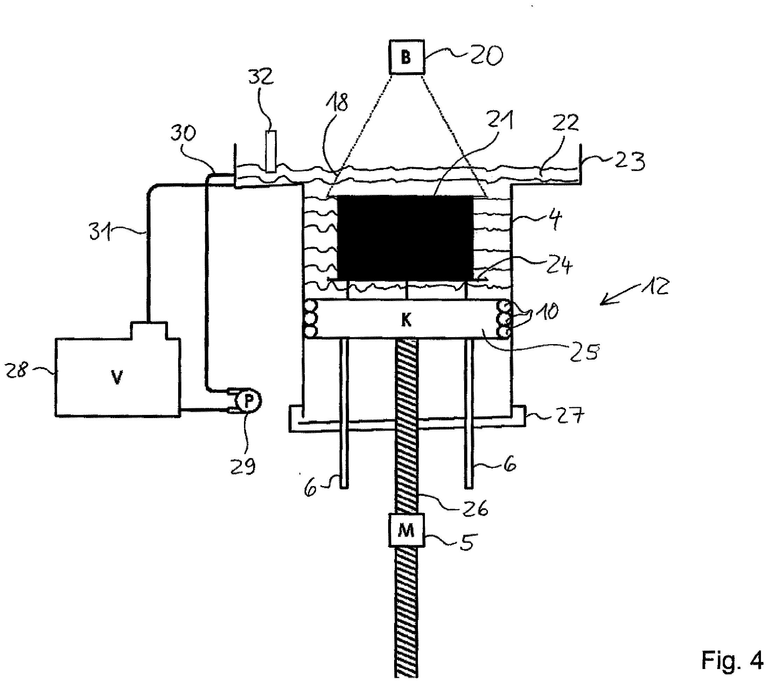

Die Figur 4 zeigt die Herstellungseinrichtung gemäß Figur 3 in einem weiter fortgeschrittenen Stadium der Herstellung des Erzeugnisses 21. Wie man erkennt, ist nun der Boden 25 wesentlich weiter nach unten verfahren worden, entsprechend der nun erreichten Bauhöhe des Erzeugnisses 21.

Die Figur 5 zeigt die erfindungsgemäße Ausführungsform einer additiven Herstellungseinrichtung, die bis auf die nachfolgend erläuterten Unterschiede der Ausführungsform der Figuren 3 und 4 entspricht. In der Figur 5 ist die Herstellungseinrichtung ohne im Fertigungsbehälter 12 eingefülltes Rohmaterial dargestellt. Zudem ist das Auftragelement 32 nicht mit dargestellt.

Während bei den bisher beschrieben Ausführungsformen die Fertigungsbasis 2, 24 immer fest mit dem verstellbaren Boden 3, 25 gekoppelt war, zeigt die Figur 5 eine Ausführungsform, bei der die Fertigungsbasis 24 vom Boden 25 entkoppelt ist und separat höhenverstellbar ist. Hierfür ist ein Höhenverstellmechanismus 33, 34 vorhanden, der mit der Fertigungsbasis 24 gekoppelt ist. Der Höhenverstellmechanismus 33, 34 kann grundsätzlich beliebiger Art sein, beispielsweise als Linearverstellmechanismus. Die Figur 5 zeigt eine Ausführungsform mit einer Spindel 33 und einem weiteren Motor 34, durch den die Spindel 33 verstellbar ist. Auf diese Weise wird wiederum ein Linearantrieb zur Linearverstellung der Fertigungsbasis 24 realisiert.

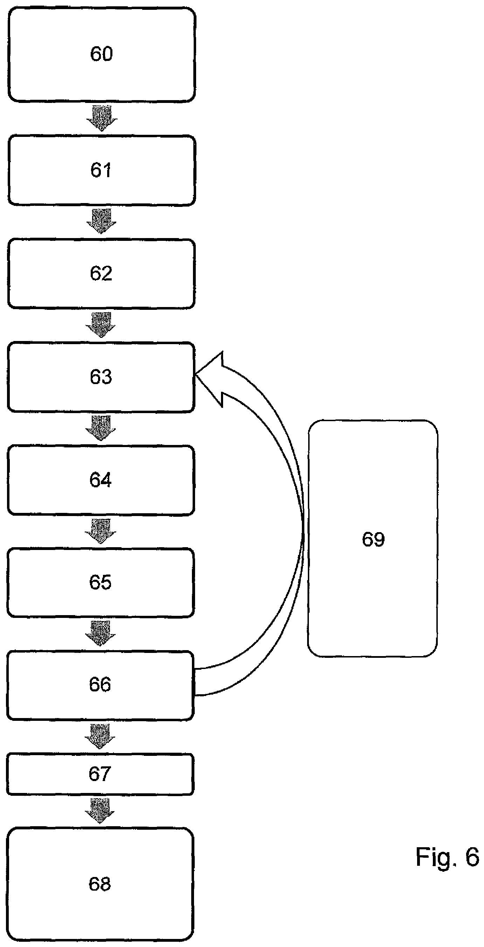

Die additive Herstellung des dreidimensionalen Erzeugnisses mittels einer Herstellungseinrichtung nach einer der Figuren 1 bis 4 kann zum Beispiel wie in Figur 6 dargestellt durchgeführt werden. In einem Schritt 60 wird zunächst die Anlagenvorbereitung durchgeführt, zum Beispiel Hochfahren des verstellbaren Bodens mit der damit verbundenen Fertigungsbasis, Zuführen einer ausreichenden Menge des Rohmaterials in den Fertigungsbehälter. In einem Schritt 61 kann ein Aufwärmen des Rohmaterials erfolgen, wobei dieser Schritt auch bereits vorab in dem Vorratsbehälter durchgeführt werden kann. In einem Schritt 62 beginnt das eigentliche Stereolithographie-Verfahren, indem mittels der Härtungseinrichtung die erste Schicht des zu erstellenden Erzeugnisses gemäß einer Vorgabedatei erzeugt wird.

In einem folgenden Schritt 63 erfolgt ein Absenken des verstellbaren Bodens um die Schichtdicke der erzeugten Schicht des Erzeugnisses. Damit wird die Fertigungsbasis ebenfalls um dieses Maß nach unten bewegt. In einem Schritt 64 erfolgt ein Auffüllen des Fertigungsbehälters mit dem Rohmaterial. In einem Schritt 65 erfolgt ein Auftragen einer frischen Schicht des Rohmaterials, zum Beispiel mittels des Auftragelements, auf dem bereits vorhandenen Teil des Erzeugnisses. Sodann erfolgt im Schritt 66 die Erzeugung der nächsten Schicht des Erzeugnisses durch Aushärten des Rohmaterials mittels der Härtungseinrichtung. Wie durch den Pfeil und den Block 69 dargestellt, werden die Schritte 63 bis 66 solange wiederholt, bis das Erzeugnis vollständig mit allen Schichten hergestellt ist.

Dann endet diese Wiederholschleife, das heißt, das Verfahren wird mit dem Schritt 67 fortgesetzt, der das Ende des Herstellungsprozesses beinhaltet. In einem folgenden Schritt 68 können Abschlussmaßnahmen durchgeführt werden, beispielsweise ein Hochfahren des verstellbaren Bodens mit der Fertigungsbasis, bis das hergestellte Erzeugnis freigelegt ist. Zudem kann ein Abfördern des Rohmaterials aus dem Fertigungsbehälter durchgeführt werden.

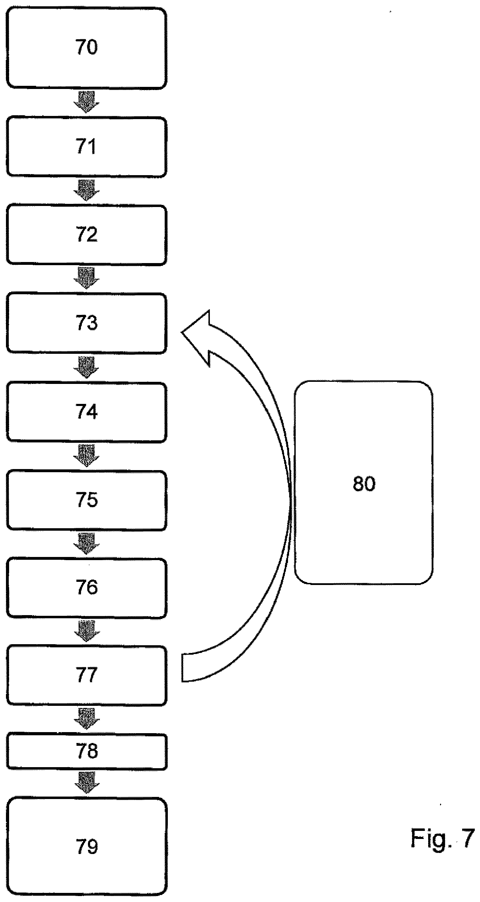

Die Figur 7 zeigt eine mögliche Vorgehensweise des Herstellverfahrens bei Verwendung der additiven Herstellungseinrichtung gemäß Figur 5, das heißt bei separat höhenverstellbarer Fertigungsbasis und Boden des Fertigungsbehälters. Die ersten Schritte 70 bis 72 entsprechen dabei den ersten Schritten 60 bis 62 des zuvor erläuterten Verfahrens. In einem Schritt 70 wird die Anlagenvorbereitung durchgeführt, zum Beispiel Hochfahren des verstellbaren Bodens mit der damit verbundenen Fertigungsbasis, Zuführen einer ausreichenden Menge des Rohmaterials in den Fertigungsbehälter. In einem Schritt 71 kann ein Aufwärmen des Rohmaterials erfolgen, wobei dieser Schritt auch bereits vorab in dem Vorratsbehälter durchgeführt werden kann. In einem Schritt 72 beginnt das eigentliche Stereolithographie-Verfahren, indem mittels der Härtungseinrichtung die erste Schicht des zu erstellenden Erzeugnisses gemäß einer Vorgabedatei erzeugt wird.

Im Schritt 73 erfolgt ein Herunterfahren des verstellbaren Bodens. Da die Fertigungsbasis nicht mit dem verstellbaren Boden gekoppelt ist, muss diese separat abgesenkt werden. Dies erfolgt im Schritt 74. Dabei muss das Maß, um das der verstellbare Boden und die Fertigungsbasis abgesenkt werden, nicht identisch sein. Selbstverständlich muss das Absenken der Fertigungsbasis um das Maß erfolgen, die der Schichtdicke einer Schicht des zu fertigenden Erzeugnisses entspricht.

Im Schritt 75 erfolgt ein Nachfüllen des Rohmaterials in den Fertigungsbehälter (entsprechend Schritt 64). Im Schritt 76 erfolgt das Auftragen einer neuen Schicht des Rohmaterials (entsprechend dem Schritt 65). Im Schritt 77 erfolgt das Erzeugen der nächsten Schicht des Erzeugnisses (entsprechend dem Schritt 66). Wie durch den Block 80 und den Pfeil angedeutet, werden in diesem Fall die Schritte 73 bis 77 solange wiederholt, bis das Erzeugnis mit sämtlichen Schichten hergestellt ist.

Danach erfolgt im Schritt 78 das Ende des Herstellprozesses (entsprechend Schritt 67). Im Schritt 79 können die abschließenden Maßnahmen durchgeführt werden (entsprechend dem Schritt 68).

Das Verfahren kann auch dahingehend variiert werden, dass der Schritt 73, der das Absenken des verstellbaren Bodens beinhaltet, nicht innerhalb der sich wiederholenden Schleife durchgeführt wird, sondern davor. Dementsprechend kann ein einmaliges Absenken des Bodens auf das am Ende des Stereolithographie-Verfahrens zu erwartende Maß durchgeführt werden, das heißt entsprechend der gewünschten Höhe des Erzeugnisses. In diesem Fall würde zudem ein entsprechendes Auffüllen des Fertigungsbehälters mit dem Rohmaterial bis auf das gewünschte Niveau vorab erfolgen.

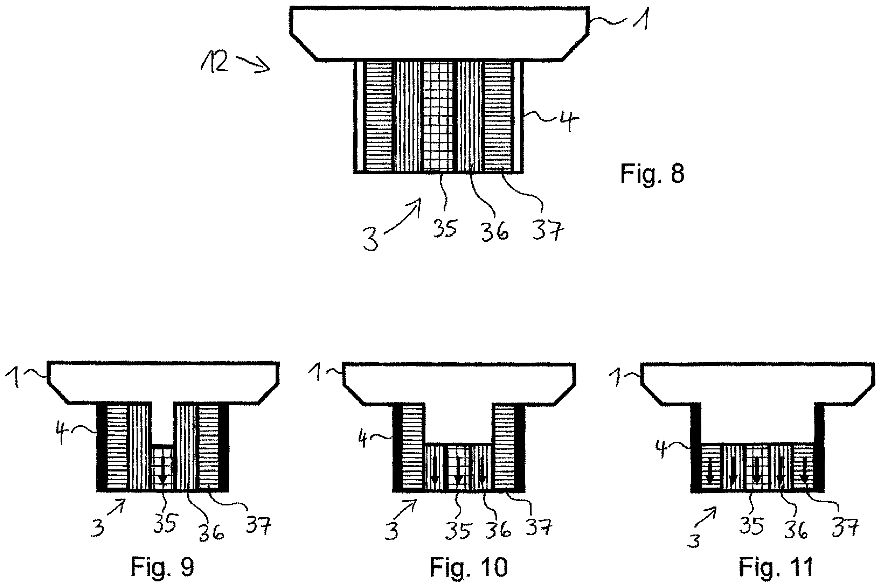

Die Figur 8 zeigt eine Ausführungsform einer additiven Herstellungseinrichtung, bei der der Fertigungsbehälter 12 einen verstellbaren Boden 3 aufweist, der aus mehreren einzelnen Bodensegmenten 35, 36, 37 zusammengesetzt ist. Diese Bodensegmente 35, 36, 37 sind jeweils separat, das heißt unabhängig voneinander, in vertikaler Richtung verstellbar. Die Bodensegmente 35, 36, 37 können beispielsweise derart ausgebildet sein, dass es ein zentrales Bodensegment 35 gibt, das ringförmig von einem Bodensegment 36 umgeben ist. Das Bodensegment 36 ist wiederum ringförmig von einem Bodensegment 37 umgeben. Die Bodensegmente 35, 36, 37 können im Bereich der Unterschale 4 nach oben oder unten bewegt werden. Es ist wiederum zusätzlich die Oberschale 1 dargestellt, die allerdings ein optionales Bauteil ist. Zur Vereinfachung sind die übrigen Elemente der Herstelleinrichtung, wie bereits erläutert, in der Figur 8 nicht dargestellt.

Anhand der Figuren 9 bis 11 werden die Möglichkeiten der Verstellung des Bodens 3 durch die Bodensegmente 35, 36, 37 erläutert. Gemäß Figur 9 ist nur das zentrale Bodensegment 35 um ein gewisses Maß nach unten bewegt worden. Auf diese Weise wird im Innenraum des Bodensegments 36 ein Freiraum geschaffen, der eine vergleichsweise geringe Breite aufweist, verglichen mit der Breite der Unterschale 4. Auf dieser Weise kann ein relativ kleines dreidimensionales Erzeugnis materialsparend mittels eines Stereolithographie-Verfahrens hergestellt werden.

Bei der Figur 10 ist erkennbar, dass das zentrale Bodensegment 35 und das dieses zentrale Bodensegment 35 umgebende Bodensegment 36 nach unten verfahren wurde. Es ist nun ein Freiraum im Innenraum des äußeren Bodensegments 37 geschaffen, in dem ein mittelgroßes dreidimensionales Erzeugnis mittels eines Stereolithographie-Verfahrens materialsparend hergestellt werden kann.

Die Figur 11 zeigt schließlich die Ausnutzung der vollen Baubreite der Unterschale 4, indem sämtliche Bodensegmente 35, 36, 37 nach unten verfahren wurden. In diesem Fall kann ein relativ großes dreidimensionales Erzeugnis mittels eines Stereolithographie-Verfahrens hergestellt werden.

Bei dieser Ausführungsform der Herstellungseinrichtung kann beispielsweise mit jeweiligen unterschiedlichen Ausführungen der Fertigungsbasis gearbeitet werden, das heißt mit Ausführungsformen, die hinsichtlich ihrer Breite dem jeweils für das Stereolithographie-Verfahren zur Verfügung stehenden Freiraum entsprechen.

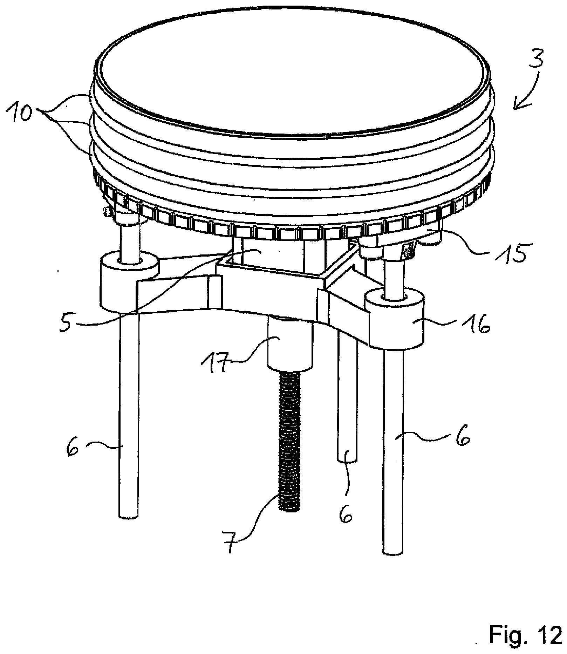

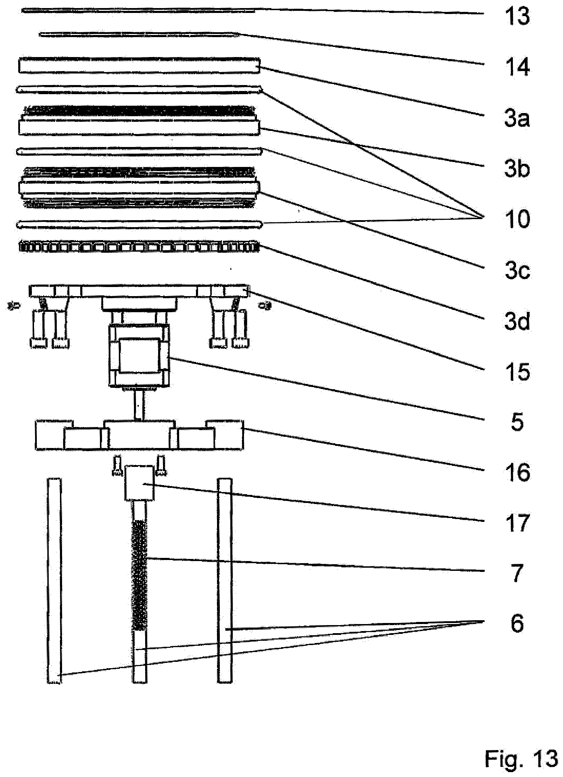

Die Figur 12 zeigt einen nach Art eines Kolbens ausgebildeten verstellbaren Boden 3 mit Teilen des Verstellmechanismus, wie er beispielsweise bei einer Fertigungseinrichtung gemäß einer der zuvor erläuterten Ausführungsformen zum Einsatz kommen kann. Die Figur 13 zeigt die Anordnung gemäß Figur 12 in Explosionsdarstellung. Wie man den Figuren 12 und 13 entnehmen kann, ist der verstellbare Boden 3 mehrschichtig aufgebaut, beginnend an der Oberseite mit einer Deckplatte 13, darunter einem Heizelement 14, darunter einem ersten Kolbensegment 3a, darunter einer ersten Dichtung 10, darunter einem zweiten Kolbensegment 3b, darunter einer zweiten Dichtung 10, darunter einem dritten Kolbensegment 3c, darunter einer dritten Dichtung 10 und abschließend darunter einem vierten Kolbensegment 3d. Das Heizelement 14 kann z.B. elektrisch beheizbar sein, um das Rohmaterial auf einer gewünschten Temperatur zu halten. Der zuvor erläuterte mehrschichtige Aufbau des Kolbens 3 ist auf einem Führungsrahmen 15 gelagert und daran befestigt. Der Führungsrahmen 15 ist über den Motor 5 mit einem zweiten Führungsrahmen 16 verbunden. Die Motorwelle des Motors 5 ist über eine Wellenkupplung 17 mit der Gewindespindel 7 verbunden.

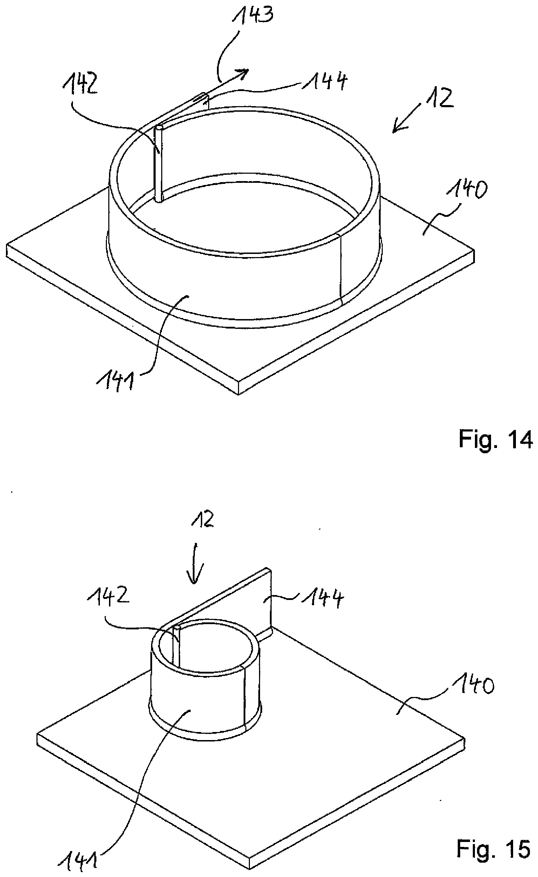

Die Figuren 14 und 15 zeigen in schematisierter Weise eine Variante eines Fertigungsbehälters 12, der nach dem Springform-Prinzip, wie es von Backformen her bekannt ist, konstruiert ist. Auf einem Boden 140 befindet sich eine ringförmig gebogene Seitenwand 141, die gegenüber dem Boden 140 abgedichtet ist und auf dem Boden 140 verstellbar ist. Die Seitenwand 141 ist über ein Fixierelement 142 ortsfest mit dem Boden 140 verbunden. Ein außerhalb des von der Seitenwand 141 umschlossenen Aufnahmevolumens angeordneter Bereich 144 der Seitenwand kann in einer Richtung 143 bewegt werden. Hierdurch wird der ringförmige Teil der Seitenwand 141 zusammengezogen und verkleinert sein innenliegendes Aufnahmevolumen, wie die Figur 15 zeigt. Durch entgegengesetzte Bewegung des Bereichs 144 kann das Aufnahmevolumen des Fertigungsbehälters 12 wieder vergrößert werden.

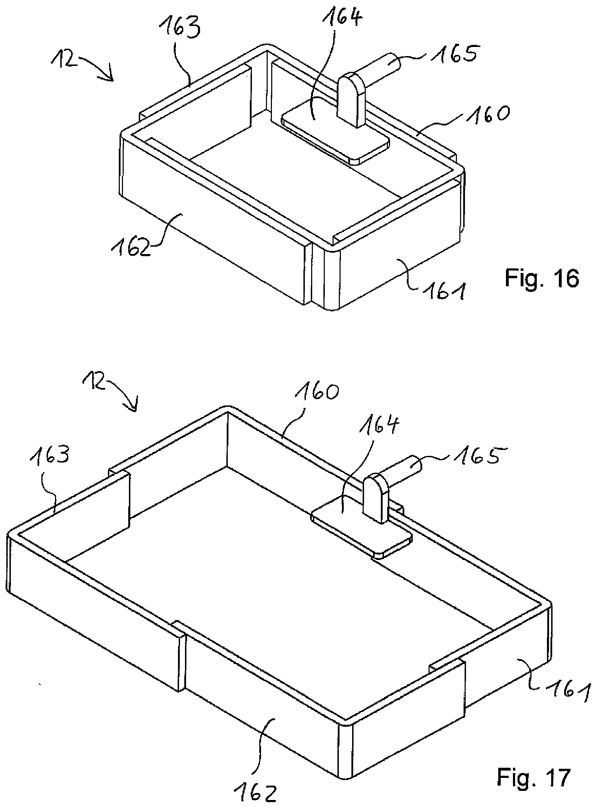

Die Figuren 16 und 17 zeigen eine Ausführungsform eines Fertigungsbehälters 12, der rechteckförmig ist und mehrere verstellbare Seitenwände 160, 161, 162, 163 aufweist. Diese Ausführungsform des Fertigungsbehälters ist nach dem Backrahmen-Prinzip konstruiert. Die Seitenwände 160, 161, 162, 163 sind jeweils rechtwinklig zueinander angeordnet und gegeneinander verschiebbar, sodass das innere Aufnahmevolumen des Fertigungsbehälters 12 vergrößert und verkleinert werden kann. Die Figur 16 zeigt die Einstellung auf ein kleines Aufnahmevolumen, die Figur 17 die Einstellung auf ein großes Aufnahmevolumen. Eine Ecke oder eine Seitenwand kann dabei fixiert sein, d.h. nicht verstellbar sein. Für die Anbringung der Bauplattform kann beispielsweise eine Aufhängung 164 eingesetzt werden, die über eine feststehende Achse 165 gehalten ist.

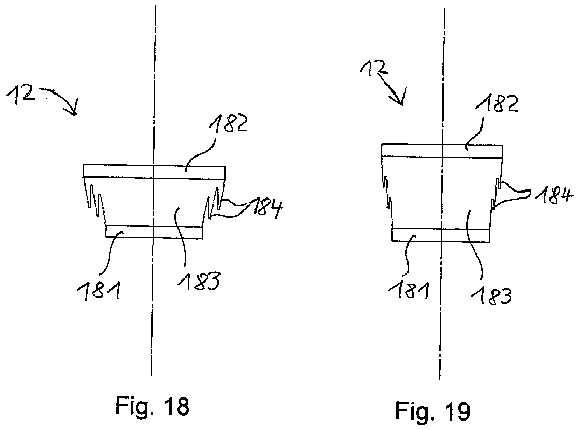

Die Figuren 18 und 19 zeigen eine Ausführungsform des Fertigungsbehälters 12 nach dem Falteimer-Prinzip. Der Fertigungsbehälter weist einen Boden 181 und eine obere ringförmige Randkante 182 auf. Die Randkante 182 ist über aus flexiblem Material gebildete Seitenwände oder eine umlaufende Seitenwand 183 mit dem Boden 181 verbunden. In bestimmten vorgegebenen Bereichen 184 kann die Seitenwand 183 zusammengefaltet werden, sodass die Bauhöhe des Fertigungsbehälters 12 in einer oder mehreren Stufen vergrößert oder verringert werden kann. Die Figur 18 zeigt den zusammengefalteten Fertigungsbehälter 12, d.h. die Einstellung auf eine geringe Bauhöhe und dementsprechend ein geringes Aufnahmevolumen. Die Figur 19 zeigt die Einstellung auf eine große Bauhöhe und dementsprechend ein großes Aufnahmevolumen.

## Patentansprüche

1. Additive Herstellungseinrichtung, die zur schichtweisen Herstellung eines dreidimensionalen Erzeugnisses (21) aus einem flüssigen Rohmaterial (22) mittels eines Tauchbad-Stereolithographie-Verfahrens eingerichtet ist, wobei die additive Herstellungseinrichtung einen Fertigungsbehälter (12) zur Aufnahme des zu verarbeitenden Rohmaterials (22) aufweist, wobei der Fertigungsbehälter (12) hinsichtlich seines Aufnahmevolumens für das Rohmaterial (22) variabel verstellbar ist, wobei die additive Herstellungseinrichtung eine Fertigungsbasis (2, 24) aufweist, auf der das Erzeugnis im Betrieb der additiven Herstellungseinrichtung mittels des Tauchbad-Stereolithographie-Verfahrens dreidimensional schichtweise erstellt wird, wobei der Fertigungsbehälter (12) einen verstellbaren Boden (3, 25) aufweist, durch dessen Verstellung das Aufnahmevolumen des Fertigungsbehälters (12) variabel verstellbar ist, wobei die Fertigungsbasis (2, 24) vom verstellbaren Boden (3, 25) entkoppelt ist und separat vom verstellbaren Boden (3, 25) mittels eines Höhenverstellmechanismus (33, 34) höhenverstellbar ist, wobei die Fertigungsbasis (2, 24) oberhalb des verstellbaren Bodens (3, 25) angeordnet ist, **dadurch gekennzeichnet, dass** die Fertigungsbasis (2, 24) an der Oberseite des Fertigungsbehälters (12) mit dem Höhenverstellmechanismus (33, 34) verbunden ist.

2. Additive Herstellungseinrichtung nach Anspruch 1, **dadurch gekennzeichnet, dass** der Fertigungsbehälter (12) wenigstens einen vertikal und/oder horizontal verstellbaren Kolben aufweist, durch dessen Verstellung das Aufnahmevolumen des Fertigungsbehälters (12) variabel verstellbar ist.

3. Additive Herstellungseinrichtung nach Anspruch 1 oder 2, **dadurch gekennzeichnet, dass** der Fertigungsbehälter (12) zumindest im Bereich der Fertigungsbasis (2, 24), in dem das Erzeugnis im Betrieb der additiven Herstellungseinrichtung mittels des Tauchbad-Stereolithographie-Verfahrens dreidimensional schichtweise erstellt wird, zur umgebenden Atmosphäre hin offen, d.h. nicht gasdicht, ist.

4. Additive Herstellungseinrichtung nach einem der vorhergehenden Ansprüche, **dadurch gekennzeichnet, dass** der verstellbare Boden (3, 25) mehrere einzelne Bodensegmente (35, 36, 37) aufweist, die separat voneinander höhenverstellbar sind.

5. Additive Herstellungseinrichtung nach einem der vorhergehenden Ansprüche, **dadurch gekennzeichnet, dass** der verstellbare Boden (3, 25) nach Art eines Kolbens ausgebildet ist, der am Außenumfang wenigstens eine Dichtung (10) aufweist.

6. Additive Herstellungseinrichtung nach Anspruch 5, **dadurch gekennzeichnet, dass** der verstellbare Boden (3, 25) aus mehreren Einzelsegmenten zusammengesetzt ist, zwischen denen jeweils eine Dichtung (10) angeordnet ist.

7. Additive Herstellungseinrichtung nach einem der vorhergehenden Ansprüche, **dadurch gekennzeichnet, dass** die additive Herstellungseinrichtung wenigstens einen Fördermechanismus (29) zum Nach- und/oder Abfördern des Rohmaterials (22) von und/oder in einem Rohmaterial-Vorratsbehälter (28) in den Fertigungsbehälter (12) aufweist. Zusätzlich auch Abführung überschüssigen Materials mittels Überlauf.

8. Additive Herstellungseinrichtung nach Anspruch 7, **dadurch gekennzeichnet, dass** die additive Herstellungseinrichtung wenigstens eine Heizeinrichtung zum Beheizen des im Rohmaterial-Vorratsbehälter (28) und / oder im Fertigungsbehälter (12) befindlichen Rohmaterials (22) aufweist.

9. Additive Herstellungseinrichtung nach einem der vorhergehenden Ansprüche, **dadurch gekennzeichnet, dass** der Fertigungsbehälter (12) ein oder mehrere verstellbare Seitenwände (141, 160, 161, 162, 163) aufweist, durch deren Verstellung das Aufnahmevolumen des Fertigungsbehälters (12) variabel verstellbar ist und wobei die verstellbaren Seitenwände (141, 160, 161, 162, 163) über Dichtungen verfügen, die zu einer darunter befindlichen, unveränderlichen Bodenplatte den Fertigungsbehälter (12) abdichten.

10. Additive Herstellungseinrichtung nach einem der vorhergehenden Ansprüche, **dadurch gekennzeichnet, dass** der Fertigungsbehälter (12) nach Art eines Falteimers, nach Art eines verstellbaren Backrahmens, nach Art einer verstellbaren Springform oder nach dem Irisblenden-Bauprinzip ausgebildet ist.

11. Additive Herstellungseinrichtung nach einem der vorhergehenden Ansprüche, **dadurch gekennzeichnet, dass** der Fertigungsbehälter (12) einen kreisförmigen, einen quadratischen oder einen rechteckförmigen Querschnitt aufweist.

12. Tauchbad-Stereolithographie-Verfahren zur schichtweisen Herstellung eines dreidimensionalen Erzeugnisses (21) aus einem flüssigen Rohmaterial (22) mittels einer additiven Herstellungseinrichtung nach einem der vorhergehenden Ansprüche, **dadurch gekennzeichnet, dass** vor, während und/oder nach dem Herstellungsprozess des dreidimensionalen Erzeugnisses (21) das Aufnahmevolumen des Fertigungsbehälters (12) in einem oder mehreren Schritten verstellt wird.

13. Tauchbad-Stereolithographie-Verfahren nach Anspruch 15, **dadurch gekennzeichnet, dass** eine Verstellung des Aufnahmevolumens des Fertigungsbehälters (12) während des Herstellungsprozesses nach vollständiger Erzeugung einer Schicht des Erzeugnisses (21) und vor Beginn der Erzeugung der nächsten Schicht des Erzeugnisses (21) erfolgt.

## Claims

1. Additive manufacturing device which is set up for the layer-by-layer production of a three-dimensional product (21) from a liquid raw material (22) by means of an immersion bath stereolithography process, the additive manufacturing device having a production container (12) for receiving the raw material (22) to be processed, the production container (12) being variably adjustable with respect to its receiving volume for the raw material (22), the additive manufacturing device having a production base (2, 24) on which the product is produced in three-dimensional layers during operation of the additive manufacturing device by means of the immersion bath stereolithography process, wherein the production container (12) has an adjustable base (3, 25), by the adjustment of which the receiving volume of the production container (12) can be variably adjusted, wherein the production base (2, 24) is decoupled from the adjustable base (3, 25) and can be moved separately from the adjustable base (3, 25) by means of a height adjustment mechanism (33, 34), the production base (2, 24) being arranged above the adjustable base (3, 25), **characterized in that** the production base (2, 24) is connected to the height adjustment mechanism (33, 34) at the top of the production container (12).

2. Additive manufacturing device according to claim 1, **characterized in that** the production container (12) has at least one vertically and/or horizontally adjustable piston, by the adjustment of which the receiving volume of the production container (12) can be variably adjusted.

3. Additive manufacturing device according to claim 1 or 2, **characterized in that** the production container (12) is open to the surrounding atmosphere, i.e. not gas-tight, at least in the region of the production base (2, 24) in which the product is produced in three-dimensional layers by means of the immersion bath stereolithography process during operation of the additive manufacturing device.

4. Additive manufacturing device according to one of the preceding claims, **characterized in that** the adjustable base (3, 25) has a plurality of individual base segments (35, 36, 37) which can be adjusted in height separately from one another.

5. Additive manufacturing device according to one of the preceding claims, **characterized in that** the adjustable base (3, 25) is designed in the manner of a piston, which has at least one seal (10) on the outer circumference.

6. Additive manufacturing device according to claim 5, **characterized in that** the adjustable base (3, 25) is composed of a plurality of individual segments, between each of which a seal (10) is arranged.

7. Additive manufacturing device according to one of the preceding claims, **characterized in that** the additive manufacturing device has at least one conveying mechanism (29) for supplying and/or discharging the raw material (22) from and/or in a raw material storage container (28) into the production container (12). In addition, excess material is also discharged by means of an overflow.

8. Additive manufacturing device according to claim 7, **characterized in that** the additive manufacturing device has at least one heating device for heating the raw material (22) located in the raw material storage container (28) and or in the production container (12).

9. Additive manufacturing device according to one of the preceding claims, **characterized in that** the manufacturing container (12) has one or more adjustable side walls (141, 160, 161, 162, 163), by the adjustment of which the receiving volume of the production container (12) can be variably adjusted, and wherein the adjustable side walls (141, 160, 161, 162, 163) have seals which seal the production container (12) to an unchangeable base plate located underneath.

10. Additive manufacturing device according to one of the preceding claims, **characterized in that** the production container (12) is designed in the manner of a folding bucket, in the manner of an adjustable baking frame, in the manner of an adjustable springform pan or according to the iris diaphragm construction principle.

11. Additive manufacturing device according to one of the preceding claims, **characterized in that** the production container (12) has a circular, square or rectangular cross-section.

12. Immersion bath stereolithography method for the layer-by-layer production of a three-dimensional product (21) from a liquid raw material (22) by means of an additive manufacturing device according to one of the preceding claims, **characterized in that** before, during and/or after the manufacturing process of the three-dimensional product (21), the receiving volume of the production container (12) is adjusted in one or more steps.

13. Immersion bath stereolithography process according to claim 15, **characterized in that** the receiving volume of the production container (12) is adjusted during the production process after one layer of the product (21) has been completely produced and before the start of production of the next layer of the product (21).

## Revendications

1. Dispositif de fabrication additive conçu pour la fabrication par couches d'un produit tridimensionnel (21) à partir d'un matériau brut liquide (22) au moyen d'un procédé de stéréolithographie à bain d'immersion,
dans lequel
le dispositif de fabrication additive présente un récipient de fabrication (12) destiné à recevoir le matériau brut (22) à traiter,
le récipient de fabrication (12) est réglable de manière variable en ce qui concerne son volume de réception du matériau brut (22),
le dispositif de fabrication additive comprend une base de fabrication (2, 24) sur laquelle le produit est fabriqué par couches en trois dimensions au moyen du procédé de stéréolithographie à bain d'immersion pendant le fonctionnement du dispositif de fabrication additive,
le récipient de fabrication (12) présente un fond réglable (3, 25) dont le réglage permet de faire varier le volume de réception du récipient de fabrication (12),
la base de fabrication (2, 24) est découplée du fond réglable (3, 25) et peut être réglée en hauteur au moyen d'un mécanisme de réglage en hauteur (33, 34) séparément du fond réglable (3, 25),
la base de fabrication (2, 24) est disposée au-dessus du fond réglable (3, 25),
**caractérisé en ce que** la base de fabrication (2, 24) est reliée au mécanisme de réglage en hauteur (33, 34) sur la face supérieure du récipient de fabrication (12).

2. Dispositif de fabrication additive selon la revendication 1,
**caractérisé en ce que** le récipient de fabrication (12) présente au moins un piston déplaçable verticalement et/ou horizontalement, dont le déplacement permet de régler de manière variable le volume de réception du récipient de fabrication (12).

3. Dispositif de fabrication additive selon la revendication 1 ou 2, **caractérisé en ce que** le récipient de fabrication (12) est ouvert vers l'atmosphère environnante, c'est-à-dire est non étanche aux gaz, au moins dans la zone de la base de fabrication (2, 24) dans laquelle le produit est fabriqué par couches en trois dimensions au moyen du procédé de stéréolithographie à bain d'immersion pendant le fonctionnement du dispositif de fabrication additive.

4. Dispositif de fabrication additive selon l'une des revendications précédentes,
**caractérisé en ce que** le fond réglable (3, 25) comprend plusieurs segments de fond individuels (35, 36, 37) qui sont réglables en hauteur séparément les uns des autres.

5. Dispositif de fabrication additive selon l'une des revendications précédentes,
**caractérisé en ce que** le fond réglable (3, 25) est réalisé à la manière d'un piston présentant sur sa périphérie extérieure au moins un joint d'étanchéité (10).

6. Dispositif de fabrication additive selon la revendication 5,
**caractérisé en ce que** le fond réglable (3, 25) est composé de plusieurs segments individuels entre lesquels est disposé respectivement un joint d'étanchéité (10).

7. Dispositif de fabrication additive selon l'une des revendications précédentes,
**caractérisé en ce que** le dispositif de fabrication additive comporte au moins un mécanisme de convoyage (29) pour acheminer et/ou évacuer le matériau brut (22) depuis et/ou dans un réservoir de stockage de matériau brut (28) vers le récipient de fabrication (12), en supplément pour évacuer également du matériau excédentaire au moyen d'un trop-plein.

8. Dispositif de fabrication additive selon la revendication 7,
**caractérisé en ce que** le dispositif de fabrication additive comporte au moins un dispositif de chauffage pour chauffer le matériau brut (22) se trouvant dans le réservoir de matériau brut (28) et/ou dans le récipient de fabrication (12).

9. Dispositif de fabrication additive selon l'une des revendications précédentes,
**caractérisé en ce que** le récipient de fabrication (12) présente une ou plusieurs parois latérales déplaçables (141, 160, 161, 162, 163), dont le déplacement permet de régler de manière variable le volume de réception du récipient de fabrication (12), et les parois latérales déplaçables (141, 160, 161, 162, 163) disposent de joints d'étanchéité qui assurent l'étanchéité du récipient de fabrication (12) par rapport à une plaque de fond fixe se trouvant en dessous.

10. Dispositif de fabrication additive selon l'une des revendications précédentes,
**caractérisé en ce que** le récipient de fabrication (12) est conçu à la manière d'un seau pliable, à la manière d'un cadre de cuisson réglable, à la manière d'un moule démontable réglable ou selon le principe de construction d'un diaphragme iris.

11. Dispositif de fabrication additive selon l'une des revendications précédentes,
**caractérisé en ce que** le récipient de fabrication (12) présente une section transversale circulaire, carrée ou rectangulaire.

12. Procédé de stéréolithographie à bain d'immersion pour la fabrication par couches d'un produit tridimensionnel (21) à partir d'un matériau brut liquide (22) au moyen d'un dispositif de fabrication additive selon l'une des revendications précédentes,
**caractérisé en ce qu'**avant, pendant et/ou après le processus de fabrication du produit tridimensionnel (21), le volume de réception du récipient de fabrication (12) est réglé en une ou en plusieurs étapes.

13. Procédé de stéréolithographie à bain d'immersion selon la revendication 12,
**caractérisé en ce qu'**un réglage du volume de réception du récipient de fabrication (12) a lieu pendant le processus de fabrication après la production complète d'une couche du produit (21) et avant le début de la production de la couche suivante du produit (21).
